# FASCICULE DE BREVET EUROPEEN

(11) **EP 4 164 938 B1**
(45) Date de publication et mention de la délivrance du brevet: **14.08.2024**
(21) Numéro de dépôt: 21725156.0
(22) Date de dépôt: 11.05.2021
(51) Int. Cl.: B62D 25/20

(54) **STRUCTURE DE PLANCHER DE VÉHICULE AUTOMOBILE RENFORCÉE PAR UNE TRAVERSE EN DEUX PARTIES**
DURCH EINEN ZWEITEILIGEN QUERTRÄGER VERSTÄRKTE KRAFTFAHRZEUGBODENSTRUKTUR
MOTOR VEHICLE FLOOR STRUCTURE REINFORCED BY A TWO-PART CROSS MEMBER

(30) Priorité: 16.06.2020 FR 2006231
(43) Date de publication de la demande: 19.04.2023
(73) Titulaire: RENAULT s.a.s., 92100 Boulogne-Billancourt (FR)
(72) Inventeur: FOUBERT, Vincent, 78200 BOISSY MAUVOISIN (FR); HLUBINA, Thierry, 92370 CHAVILLE (FR); OLIVIER, Louis, 78000 VERSAILLES (FR)
(86) Numéro de dépôt international: PCT/EP2021/062422
(87) Numéro de publication internationale: WO 2021/254693

(56) Documents cités:
- WO-A1-2010/122411
- WO-A1-2015/079928
- JP-A- 2007 131 148
- JP-A- 2017 144 946

## Description

L'invention a pour objet une structure de plancher de véhicule automobile, notamment une structure de plancher arrière.

Dans certains véhicules (WO 2015/079928 A1) de grand empattement, afin de garantir l'accessibilité et le confort de sièges en rang 3, il peut être nécessaire de positionner des fixations arrière des sièges de rang 2 au niveau d'une zone de plancher qui est dépourvue de renfort structurel. Par ailleurs, un réservoir de grande capacité commun à différentes versions d'une gamme de véhicule peut être positionné de sorte que sa fixation arrière se retrouve également au niveau de cette même zone de plancher dépourvue de renfort structurel. Enfin, cette zone dépourvue de renfort structurel se trouve sur le chemin pavillon / garde au sol et correspond à une zone située entre le réservoir commun à une gamme de véhicule (calé sur la garde au sol) et les pieds des occupants du rang 3 (dont on doit assurer le confort et l'ergonomie), eux-mêmes contraints par la position de la structure des sièges du rang 2 qui assure à ses occupants une position confortable vis-à-vis du pavillon.

Il existe donc un besoin pour une structure de plancher de véhicule renforcée compacte verticalement.

A cet effet, un premier objet de l'invention concerne une structure de plancher de véhicule automobile comprenant deux longerons s'étendant suivant une direction longitudinale de la structure, un plancher s'étendant entre les deux longerons, et une traverse s'étendant suivant une direction transversale de la structure, reliant les longerons et fixée à la structure de plancher, caractérisée en ce que la traverse comprend une partie supérieure concave formant une première demi-coque, une partie inférieure concave formant une deuxième demi-coque, les parties inférieure et supérieure étant disposées de part et d'autre du plancher en regard l'une de l'autre, le plancher fermant leur concavité.

Autrement dit, les parties supérieure et inférieure forment un corps creux s'étendant de part et d'autre du plancher de sorte que le volume du corps creux est traversé par le plancher.

Cette configuration particulière de la traverse permet de limiter son encombrement vertical, à savoir suivant une direction perpendiculaire aux directions longitudinale et transversale de la structure de plancher.

Dans un mode de réalisation, la traverse peut être constituée uniquement des parties inférieure et supérieure.

Avantageusement, chacune des parties inférieure et supérieure peut présenter une section dans un plan longitudinal en forme de Oméga Ω. Ceci permet de réaliser une traverse résistante et compacte suivant la direction longitudinale.

Avantageusement, la partie inférieure de traverse peut être formée de trois portions distinctes : deux portions d'extrémité formant chacune une extrémité de la partie inférieure et fixée aux longerons, et une portion centrale dont chaque extrémité est assemblée à une portion d'extrémité. Ceci permet de réaliser des portions présentant des caractéristiques adaptées aux exigences souhaitées, notamment en termes de résistance, de confort pour les passagers. Ces portions peuvent être assemblées entre elles par soudure, vis, rivets ou combinaison de ces moyens.

Ainsi, la portion centrale peut présenter au moins une des caractéristiques suivantes :
- une épaisseur différente des portions d'extrémité, optionnellement une épaisseur supérieure à l'épaisseur des portions d'extrémité,
- un matériau différent du matériau constituant les portions d'extrémité, par exemple un matériau présentant des propriétés mécaniques supérieures à celles du matériau des portions d'extrémité.

En variante ou en combinaison, les portions d'extrémité de la partie inférieure de traverse peuvent épouser au moins en partie la portion de longeron à laquelle elles sont fixées, ceci notamment afin de faciliter l'équerrage de ces portions aux longerons et d'améliorer la fixation aux longerons de la partie inférieure de traverse.

Avantageusement, la partie supérieure peut présenter à ses extrémités une hauteur, mesurée depuis le plancher perpendiculairement aux directions longitudinale et transversale, inférieure à une hauteur de la partie supérieure de traverse à distance de ses extrémités. Autrement dit, les extrémités de la partie supérieure peuvent être écrasées de sorte que l'encombrement vertical de la traverse est particulièrement réduit à ses extrémités, notamment au niveau des longerons, ce qui peut faciliter l'accès des passagers aux sièges de rang 3. Notamment cette hauteur peut être nulle.

Avantageusement, chaque partie de traverse peut être pourvue d'au moins un élément de fixation. Cet élément de fixation peut ainsi être adapté à un élément fonctionnel qui doit être fixé à la structure de plancher.

Cet élément fonctionnel peut être un réservoir, notamment un réservoir commun à une gamme de véhicule, pour la partie inférieure de traverse.

Cet élément fonctionnel peut être, pour la partie supérieure de traverse, un élément de fixation d'un siège, notamment d'un siège de rang 2. On pourra alors prévoir plusieurs éléments de fixation de siège.

Dans un mode de réalisation, la partie supérieure de traverse peut ainsi comprendre au moins un élément de fixation formant un pontet s'étendant suivant la direction transversale, et dont une partie s'étend à distance d'une face externe de la partie supérieure de traverse suivant une direction perpendiculaire aux directions longitudinale et transversale.

En particulier, chaque pontet peut s'étendre en partie au dessus d'une portion concave de la face externe de la partie supérieure de traverse, notamment pour faciliter l'accrochage du siège au pontet.

De manière générale, la structure de plancher selon l'invention pourra comprendre de manière classique une autre traverse reliée aux longerons et située en arrière de la traverse en deux parties. Le plancher pourra être réalisé en une ou plusieurs parties assemblées.

L'invention concerne également un véhicule automobile équipé d'une structure de plancher selon l'invention. Avantageusement, la traverse peut s'étendre en dessous des sièges de rang 2, notamment au niveau d'une partie arrière de ceux-ci.

L'invention est maintenant décrite en référence aux dessins annexés, non limitatifs, dans lesquels :
[Fig. 1] La figure 1 représente une vue en perspective partiellement en coupe d'une structure de plancher selon un mode de réalisation, sur laquelle sont disposés des sièges de rangs 2 et 3.
[Fig. 2] La figure 2 représente une vue en coupe de la structure de plancher représentée figure 1, sensiblement au milieu de la traverse en deux partie.
[Fig. 3] La figure 3 représente une vue de dessus de la structure de plancher représentée figure 1.
[Fig. 4] La figure 4 représente une vue de dessous de la structure de plancher représentée figure 1, sans le plancher.

Dans la présente description, les termes avant, arrière, supérieur, inférieur, font référence aux directions avant et arrière du véhicule, lorsque la structure de plancher est montée sur le véhicule. Les axes X, Y, Z, correspondent respectivement à l'axe longitudinal (d'avant en arrière), transversal (dirigé vers la droite) et vertical (dirigé vers le haut) du véhicule, ce dernier reposant sur le sol. La direction verticale correspond ainsi à la direction de la gravité.

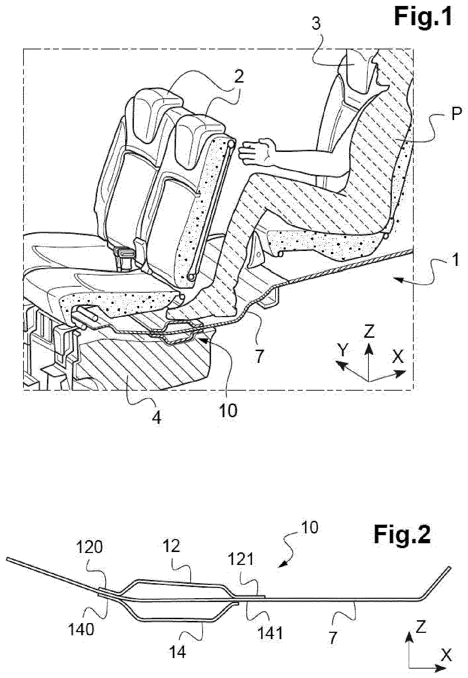

La figure 1 représente une structure 1 de plancher de véhicule automobile sur laquelle sont montés des sièges 2 de rang 2 et des sièges 3 de rang 3 (un seul des sièges de rang 3 est représenté pour davantage de clarté). Un passager P assis sur un siège de rang 3 est représenté schématiquement sur cette figure : on constate que ses pieds sont situés sensiblement sous un siège de rang 2, à l'arrière de celui-ci, notamment sous son dossier. En outre, un réservoir à carburant 4 est situé sous la structure de plancher 1, ici sous les sièges de rang 2, notamment sous leur assise et leur dossier.

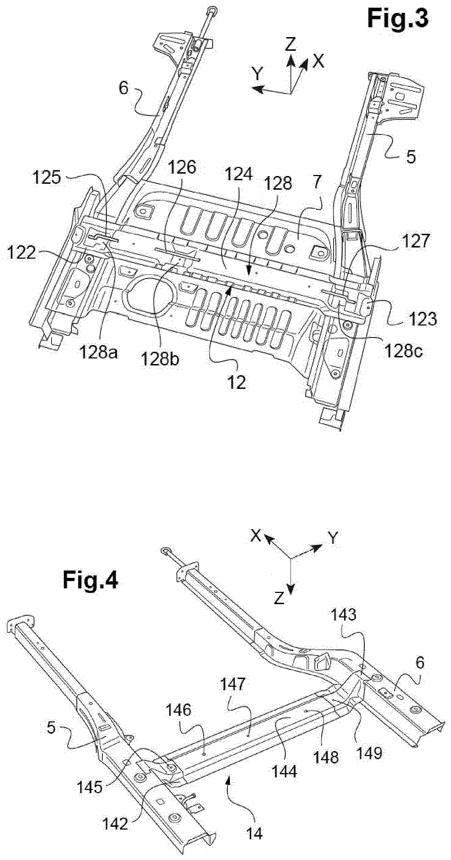

Tel que visible plus clairement sur les figures 3 et 4, la structure de plancher 1 comprend deux longerons 5, 6 s'étendant chacun suivant une direction longitudinale de la structure de plancher 1 et un plancher 7 s'étendant entre les deux longerons 5, 6. La structure de plancher 1 comprend aussi une traverse 10 qui s'étend suivant une direction transversale de la structure de plancher 1. Cette traverse 10 est fixée à la structure de plancher 1, ici aux longerons 5, 6 qu'elle relie, et au plancher 7. On notera que les directions longitudinale et transversale de la structure de plancher 1 correspondent aux directions longitudinale et transversale du véhicule comprenant cette structure de plancher.

Selon l'invention, la traverse 10 comprend une partie supérieure concave 12 formant une première demi-coque et une partie inférieure concave 14 formant une deuxième demi-coque. Ces deux demi-coques 12, 14 sont disposées en regard l'une de l'autre de part et d'autre du plancher 7, le plancher 7 fermant leur concavité, tel qu'on peut le voir sur les figures 1 et 2. La traverse 10 s'étend ainsi de part et d'autre du plancher 7, de sorte que sa hauteur, mesurée verticalement depuis le plancher 7 est réduite, que ce soit au dessus ou en dessous du plancher 7.

De manière générale, les longerons 5, 6, la traverse 10 et le plancher 7 sont en matériau métallique : ils peuvent ainsi être fixés les uns aux autres par soudure. D'autres modes de fixation sont toutefois envisageables, tels que des fixations par vis, rivet ou analogue, éventuellement combinés les uns aux autres et/ou à une soudure.

Dans l'exemple représenté, chaque partie supérieure 12 et inférieure 14 de traverse présente une section (dans un plan longitudinal) en forme générale de Oméga (Ω), dont les bords 120, 121, respectivement 140, 141 sont en regard des bords de l'autre partie, de l'autre côté du plancher 7 (voir figure 2). La forme en Oméga permet de réaliser des parties de traverse résistantes et compactes suivant la direction longitudinale. En outre, les bords en regard 120, 140, respectivement 121, 141, des parties inférieure et supérieure prennent en sandwich le plancher 7 : la partie du plancher 7 située entre ces bords se trouve aussi renforcée. Ces bords 120, 121 et 140, 141 facilitent en outre la fixation des parties inférieure et supérieure au plancher 7.

Dans l'exemple, la partie inférieure 14 de traverse est formée de trois portions distinctes : deux portions d'extrémité 142, 143 formant chacune une extrémité de la partie inférieure 14 fixée à un longeron, et une portion centrale 144 dont chaque extrémité est solidarisée à une portion d'extrémité 142, 143.

La portion centrale 144 peut ainsi être réalisée en un matériau différent des matériaux des portions d'extrémité, par exemple un matériau présentant des propriétés mécaniques assurant le comportement mécanique souhaité de la pièce. En variante ou en combinaison, l'épaisseur de la portion centrale 144 peut être différente, et/ou sa forme peut être différente. Ainsi, comme on peut le voir sur les figures, la concavité de la partie inférieure 14 de traverse s'étend sur une partie seulement de la longueur de celle-ci : à savoir sur toute la longueur de la partie centrale 144 mais sur une partie seulement de la longueur de chaque partie d'extrémité 142, 143. Chaque partie d'extrémité est par ailleurs conformée pour épouser au moins en partie la portion de longeron à laquelle elle est fixée, comme on peut le voir figure 4, pour un meilleur équerrage par rapport au longeron.

Les différentes portions de la partie inférieure 14 peuvent avantageusement être assemblées les unes aux autres par soudure et/ou tout autre mode de fixation approprié.

Dans l'exemple représenté, la partie supérieure 12 de traverse présente à ses extrémités 122, 123 une hauteur, mesurée depuis le plancher perpendiculairement aux directions longitudinale et transversale, inférieure à une hauteur de la partie supérieure de traverse à distance de ses extrémités. Ici, cette hauteur est quasiment nulle. Autrement dit, la partie supérieure 12 est concave uniquement sur sa partie 124 s'étendant entre ses extrémités 122, 123, correspondant ici à une partie s'étendant entre les longerons 5, 6. Ses extrémités 122, 123 sont au contraire appliquées contre les longerons au niveau d'une zone qui correspond à une zone d'accès d'un passager aux sièges de rang 3. Ici, les extrémités 122, 123 épousent ainsi la forme des longerons. On comprend ainsi, qu'au niveau de ces zones d'accès, il n'y a quasiment pas de surépaisseur due à la présence de la traverse 10, facilitant l'accès d'un passager aux sièges de rang 3.

On notera que la partie supérieure 12 peut être avantageusement réalisée d'une seule pièce, par exemple par emboutissage.

Chacune des parties inférieure et supérieure de traverse est enfin équipée d'un ou plusieurs éléments de fixation permettant la fixation d'éléments fonctionnels tels qu'un siège (pour la partie supérieure) ou un réservoir (pour la partie inférieure), notamment un réservoir de carburant, ici le réservoir 4.

Dans l'exemple représenté, la partie supérieure 12 présente ainsi trois éléments de fixation 125, 126, 127. Il s'agit ici de pontets s'étendant suivant la direction transversale Y, et dont une partie s'étend à distance d'une face externe 128 de la partie supérieure 12 de traverse suivant une direction perpendiculaire aux directions longitudinale et transversale (suivant la direction Z). En particulier, chaque pontet 125, 126, 127 s'étend en partie au dessus d'une portion concave 128a, 128b, 128c de la face externe 128 de la partie supérieure de traverse. La concavité de ces portions concaves est donc dirigée du côté opposé au plancher 7. Ces portions concaves facilitent le passage d'un élément de fixation d'un siège entre le pontet et la partie supérieure de traverse.

La partie inférieure 14 présente quant à elle une pluralité d'orifices 145-149 qui peuvent servir d'éléments de fixation et recevoir des ensembles vis-écrou, des rivets ou analogue. On pourra notamment prévoir de renforcer la portion de partie inférieure de traverse à laquelle devra être fixé le réservoir ou un autre élément fonctionnel de masse élevée.

Bien entendu, l'invention n'est pas limitée à un mode de réalisation particulier des éléments de fixation qui pourront être adaptés à l'élément fonctionnel qui doit être fixée à l'une ou l'autre des parties de traverse 10.

## Revendications

1. Structure de plancher (1) de véhicule automobile comprenant deux longerons (5, 6) s'étendant suivant une direction longitudinale de la structure, un plancher (7) s'étendant entre les deux longerons, et une traverse (10) s'étendant suivant une direction transversale de la structure, reliant les longerons et fixée à la structure de plancher, **caractérisée en ce que** la traverse (10) comprend une partie supérieure concave (12) formant une première demi-coque, une partie inférieure concave (14) formant une deuxième demi-coque, les parties inférieure (14) et supérieure (12) étant disposées de part et d'autre du plancher (7), en regard l'une de l'autre, le plancher (7) fermant leur concavité.

2. Structure de plancher (1) selon la revendication 1, **caractérisée en ce que** chacune des parties inférieure (14) et supérieure (12) présente une section dans un plan longitudinal en forme de Oméga Ω.

3. Structure de plancher (1) selon la revendication 1 ou 2, **caractérisée en ce que** la partie inférieure (14) de traverse est formée de trois portions distinctes : deux portions d'extrémité (142, 143) formant chacune une extrémité de la partie inférieure et fixée aux longerons, et une portion centrale (144) dont chaque extrémité est assemblée à une portion d'extrémité.

4. Structure de plancher (1) selon la revendication 3, **caractérisée en ce que** la portion centrale (144) présente au moins une des caractéristiques suivantes :
- une épaisseur différente des portions d'extrémité, optionnellement une épaisseur supérieure à l'épaisseur des portions d'extrémité,
- un matériau différent du matériau constituant les portions d'extrémité.

5. Structure de plancher (1) selon l'une quelconque des revendications 3 à 4, **caractérisée en ce que** les portions d'extrémité (142, 143) de la partie inférieure de traverse épousent au moins en partie la portion de longeron à laquelle elles sont fixées.

6. Structure de plancher (1) selon l'une quelconque des revendications 1 à 5, **caractérisée en ce que** la partie supérieure (12) présente à ses extrémités (122, 123) une hauteur, mesurée depuis le plancher perpendiculairement aux directions longitudinale et transversale, inférieure à une hauteur de la partie supérieure de traverse à distance de ses extrémités.

7. Structure de plancher (1) selon l'une quelconque des revendications 1 à 6, **caractérisée en ce que** chaque partie (12, 14) de traverse est pourvue d'au moins un élément de fixation (125-127, 145-149).

8. Structure de plancher (1) selon la revendication 7, **caractérisée en ce que** la partie supérieure (12) de traverse comprend au moins un élément de fixation (125-127) formant un pontet s'étendant suivant la direction transversale, et dont une partie s'étend à distance d'une face externe (128) de la partie supérieure de traverse suivant une direction perpendiculaire aux directions longitudinale et transversale.

9. Structure de plancher (1) selon la revendication 8, **caractérisée en ce que** chaque pontet (125-127) s'étend en partie au dessus d'une portion concave (128a, 128b, 128c) de la face externe de la partie supérieure de traverse.

10. Véhicule automobile équipé d'une structure de plancher (1) selon l'une quelconque des revendications 1 à 9.

## Patentansprüche

1. Bodenstruktur (1) für ein Kraftfahrzeug, umfassend zwei Längsträger (5, 6), die sich in einer Längsrichtung der Struktur erstrecken, einen Boden (7), der sich zwischen den beiden Längsträgern erstreckt, und einen Querträger (10), der sich in einer Querrichtung der Struktur erstreckt, die die Längsträger verbindet und an der Bodenstruktur befestigt ist, **dadurch gekennzeichnet, dass** der Querträger (10) einen oberen konkaven Teil (12), der eine erste Halbschale bildet, und einen unteren konkaven Teil (14), der eine zweite Halbschale bildet, umfasst, wobei der untere (14) und der obere Teil (12) auf beiden Seiten des Boden (7) einander gegenüberliegend angeordnet sind, wobei der Boden (7) ihre Konkavität schließt.

2. Bodenstruktur (1) nach Anspruch 1, **dadurch gekennzeichnet, dass** sowohl der untere (14) als auch der obere Teil (12) in einer Längsebene einen Omega(Ω)-förmigen Querschnitt aufweisen.

3. Bodenstruktur (1) nach Anspruch 1 oder 2, **dadurch gekennzeichnet, dass** der untere Querträgerteil (14) aus drei verschiedenen Abschnitten gebildet ist: zwei Endabschnitten (142, 143), die jeweils ein Ende des unteren Teils bilden und am Längsträger befestigt sind, und einem mittleren Abschnitt (144), dessen Enden mit jeweils einem Endabschnitt verbunden ist.

4. Bodenstruktur (1) nach Anspruch 3, **dadurch gekennzeichnet, dass** der mittlere Abschnitt (144) mindestens eines der folgenden Merkmale aufweist:
- eine von den Endabschnitten verschiedene Dicke, optional eine größere Dicke als die Dicke der Endabschnitte,
- ein vom Material der Endabschnitte verschiedenes Material.

5. Bodenstruktur (1) nach einem der Ansprüche 3 bis 4, **dadurch gekennzeichnet, dass** sich die Endabschnitte (142, 143) des unteren Teils des Querträgers zumindest teilweise an den Längsträgerabschnitt, an dem sie befestigt sind, anpassen.

6. Bodenstruktur (1) nach einem der Ansprüche 1 bis 5, **dadurch gekennzeichnet, dass** der obere Teil (12) an seinen Enden (122, 123) eine Höhe aufweist, die, vom Boden senkrecht zur Längs- und zur Querrichtung gemessen, kleiner als eine Höhe des oberen Teils des Querträgers im Abstand zu seinen Enden ist.

7. Bodenstruktur (1) nach einem der Ansprüche 1 bis 6, **dadurch gekennzeichnet, dass** jeder Querträgerteil (12, 14) mit mindestens einem Befestigungselement (125 - 127, 145 - 149) versehen ist.

8. Bodenstruktur (1) nach Anspruch 7, **dadurch gekennzeichnet, dass** der obere Querträgerteil (12) mindestens ein Befestigungselement (125 - 127) umfasst, das einen Bügel bildet, der sich in der Querrichtung erstreckt, und dessen einer Teil sich im Abstand zu einer Außenseite (128) des oberen Querträgerteils in einer zur Längs- und zur Querrichtung senkrechten Richtung erstreckt.

9. Bodenstruktur (1) nach Anspruch 8, **dadurch gekennzeichnet, dass** sich jeder Bügel (125 - 127) zum Teil über einem konkaven Abschnitt (128a, 128b, 128c) der Außenseite des oberen Querträgerteils erstreckt.

10. Kraftfahrzeug, das mit einer Bodenstruktur (1) nach einem der Ansprüche 1 bis 9 ausgestattet ist.

## Claims

1. Motor vehicle floor structure (1) comprising two longitudinal members (5, 6) extending in a longitudinal direction of the structure, a floor (7) extending between the two longitudinal members, and a cross member (10) extending in a transverse direction of the structure, connecting the longitudinal members and fastened to the floor structure, **characterized in that** the cross member (10) comprises a concave upper part (12) forming a first half-shell, a concave lower part (14) forming a second half-shell, the lower part (14) and the upper part (12) being arranged on the two sides of the floor (7), facing one another, the floor (7) closing the concavities thereof.

2. Floor structure (1) according to Claim 1, **characterized in that** the lower part (14) and the upper part (12) each have a section in a longitudinal plane having an omega Ω shape.

3. Floor structure (1) according to Claim 1 or 2, **characterized in that** the lower cross-member part (14) is formed of three separate portions: two end portions (142, 143), each of which forms one end of the lower part and is fastened to the longitudinal members, and a central portion (144), each end of which is assembled to an end portion.

4. Floor structure (1) according to Claim 3, **characterized in that** the central portion (144) has at least one of the following features:
- a different thickness than the end portions, optionally a greater thickness than the thickness of the end portions,
- a different material than the material used to make the end portions.

5. Floor structure (1) according to either of Claims 3 and 4, **characterized in that** the end portions (142, 143) of the lower cross-member part at least partially fit the longitudinal member portion to which they are fastened.

6. Floor structure (1) according to any one of Claims 1 to 5, **characterized in that** the height of the upper part (12) at the ends (122, 123) thereof, measured from the floor perpendicularly to the longitudinal and transverse directions, is less than the height of the upper cross-member part away from the ends thereof.

7. Floor structure (1) according to any one of Claims 1 to 6, **characterized in that** each cross-member part (12, 14) is provided with at least one fastening element (125-127, 145-149).

8. Floor structure (1) according to Claim 7, **characterized in that** the upper cross-member part (12) comprises at least one fastening element (125-127) forming a bridge extending in the transverse direction, and of which a part extends away from an outer face (128) of the upper cross-member part in a direction perpendicular to the longitudinal and transverse directions.

9. Floor structure (1) according to Claim 8, **characterized in that** each bridge (125-127) extends partially above a concave portion (128a, 128b, 128c) of the outer face of the upper cross-member part.

10. Motor vehicle equipped with a floor structure (1) according to any one of Claims 1 to 9.
